# EUROPEAN PATENT APPLICATION

(11) **EP 3 242 103 A1**
(43) Date of publication of application: **08.11.2017**
(21) Application number: 15868810.1
(22) Date of filing: 10.12.2015
(51) Int. Cl.: F28D 7/02, F28D 1/047

(54) **BARREL-SHAPED COMPONENT AND CONTAINER AND ELECTRIC MOTOR HOUSING BASED THEREON**

(30) Priority: 15.12.2014 CN 201410775145; 15.12.2014 CN 201420794439 U; 15.12.2014 CN 201420794230 U
(71) Applicant: Liu, Jian, Ningbo, Zhejiang 315151 (CN)
(72) Inventor: Liu, Jian, Ningbo, Zhejiang 315151 (CN)
(74) Representative: Becker Kurig Straus
(86) International application number: PCT/CN2015/000876
(87) International publication number: WO 2016/095293

(57) **Abstract**

Disclosed is a barrel-shaped component and a container and an electric motor housing based thereon. The barrel-shaped component comprises a hollow metal pipe (11), wherein two ends of the hollow metal pipe (11) are respectively provided with an inlet (12) and an outlet (13). The hollow metal pipe (11) continuously spirals around an axis to form a plurality of annular components (14) arranged in parallel, wherein the annular components (14) are welded and fixed to each other. A component of any shape and size can be processed by using a simple elbow mould, thereby improving the cooling effect, lowering the processing cost and the material cost, and increasing the rigidity of the whole component where the barrel has the same wall thickness.

## Description

### BACKGROUND OF THE INVENTION

### 1. Field of the Invention

The present invention is related to a component, in particular to a barrel-shaped component and a vessel and motor housing based on it.

### 2. Description of Related Art

In most cases, existing barrel-shaped components are used in a cooling and heating occasion. For instance, motor housing normally requires cooling. Many vessels used to collect liquids also require to be heated and cooled. Present structure falls into the following several types. Firstly, shaped materials are used for processing; however, only straight pipeline can be formed. However, complicated water line structure and high cost may affect the rigidity of the housing. Secondly, the submerged tube is used for processing; in other words, the cooling tube is embedded into the motor housing wall. However, such processing technique is so complicated, which requires higher investment in moulds. Thirdly, sleeve-connected process is used; in other words, the motor housing is divided into internal and external housings, and a cooling tube is provided between the two housings. However, such structure has disadvantages of poor rigidity and higher cost.

### SUMMARY OF THE INVENTION

The technical issue to be solved by the present invention is to provide a barrel-shaped component, as well as a vessel housing and a motor housing based on it, featuring in easy processing, low cost, high rigidity and excellent cooling effect.

Technical solution used by the present invention to solve aforesaid technical issue is a barrel-shaped component comprising a hollowed metallic tube; both ends of the hollowed metallic tube are provided with an inlet and an outlet respectively; the hollowed metallic tube continuously circles around an axis to form numerous parallel annular components; the annular components are fixed through welding.

The annular components are fixed through welding on intermittent welding points.

A gap is reserved among the annular components.

The annular components are fixed through welding on a continuous welding layer.

The annular components are circular components.

The annular components are polygonal annular components.

The cross section of the hollowed metallic tube is in a shape of a circle or a polygon.

Aforesaid barrel-shaped component serves as the cylinder of a vessel; both ends of the cylinder are provided with a base plate and an end cover, respectively. When it is used as a vessel, there should be no gap among numerous parallel annular components formed by the hollowed metallic tube continuously circling around the axis.

Aforesaid barrel-shaped component can also constitute a motor housing through providing an end cover on each of the two ends respectively. In such case, the barrel-shaped component is used as the motor housing body.

As compared with prior arts, the advantage of the present invention lies in the fact that it makes use of a hollowed tube to form numerous parallel annular components through circling. Furthermore, adjacent annular components are welded, connected and fixed to form a big barrel-shaped component. Not only the cooling effect is significantly improved, but also the processing is easy, and the costs of processing and materials are reduced. Meanwhile, as compared with prior arts, rigidity of the whole component can be improved when the cylinder wall thickness remains unchanged. The present invention is available for processing of components of any form and size with help of simple bending molds. The barrel-shaped component according to the present invention can be used as the cylinder of the vessel and motor housing. When the barrel-shaped component is used as the motor housing, it can fix adjacent annular components through welding on the intermittent welding points for saving processing cost. Moreover, the gaps provided can also improve heat dissipation effect of the motor housing. When the barrel-shaped component is used as the cylinder of the vessel for collecting liquids, the annular component can be sealed through welding on the continuous welding layer.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
Fig. 1 is the 3D structural diagram for Embodiment 1 of the present invention;
Fig. 2 is the structural diagram for Embodiment 1 of the present invention;
Fig. 3 is the structural diagram for Embodiment 2 of the present invention;
Fig. 4 is the structural diagram for Embodiment 3 of the present invention;.
Fig. 5 is the structural diagram for Embodiment 4 of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

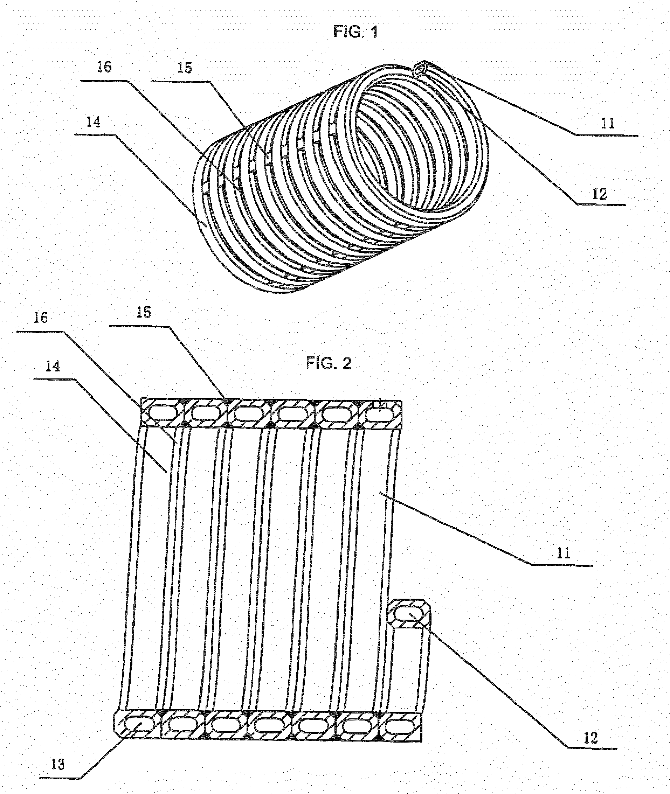

Embodiment 1: A barrel-shaped component as shown in Fig. 1 and 2, comprising a hollowed metallic tube 11, wherein a cross section of the hollowed metallic tube 11 is in a shape of square; both ends of the hollowed metallic tube 11 are provided with an inlet 12 and an outlet 13, respectively; the hollowed metallic tube 11 continuously circles around an axis to form numerous parallel annular components 14, wherein the annular components 14 are circular components; the annular components 14 are fixed through welding on intermittent welding points 15; and a gap 16 is reserved among the annular components 14.

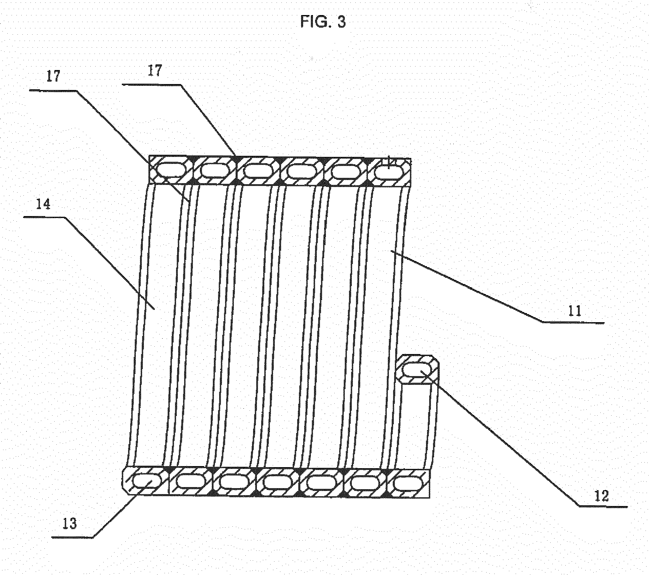

Embodiment 2: A barrel-shaped component as shown in Fig. 3, comprising a hollowed metallic tube 11, wherein a cross section of the hollowed metallic tube 11 is in a shape of hexagon; both ends of the hollowed metallic tube 11 are provided with an inlet 12 and an outlet 13, respectively; the hollowed metallic tube 11 continuously circles around an axis to form numerous parallel annular components 14; the annular components 14 are circular components; the annular components 14 are fixed through welding on a continuous welding layer 17.

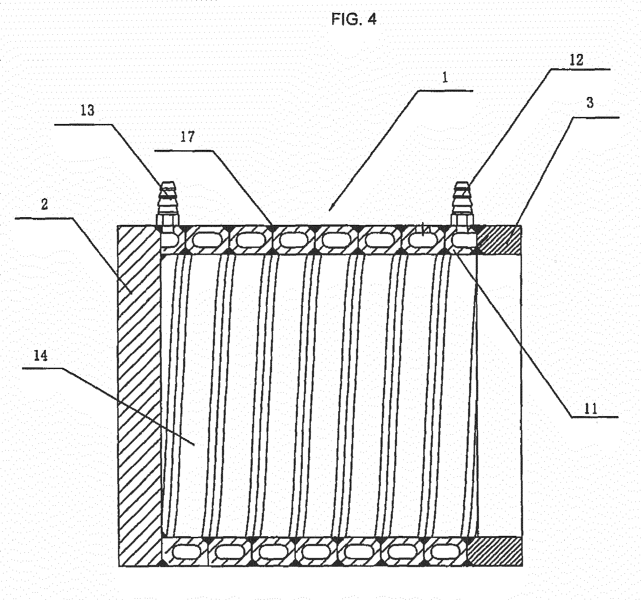

Embodiment 3: A vessel as shown in Fig. 4, comprising a cylinder 1, a base plate 2 and an end cover 3 as connected through mutual sealing and welding; the cylinder 1 comprises a hollowed metallic tube 11; a cross section of the hollowed metallic tube 11 is in a shape of square; both ends of the hollowed metallic tube 11 are provided with an inlet 12 and an outlet 13, respectively; the hollowed metallic tube 11 continuously circles around an axis to form numerous parallel annular components 14; the annular components 14 are circular components; the annular components 14 are fixed through welding on a continuous welding layer 17.

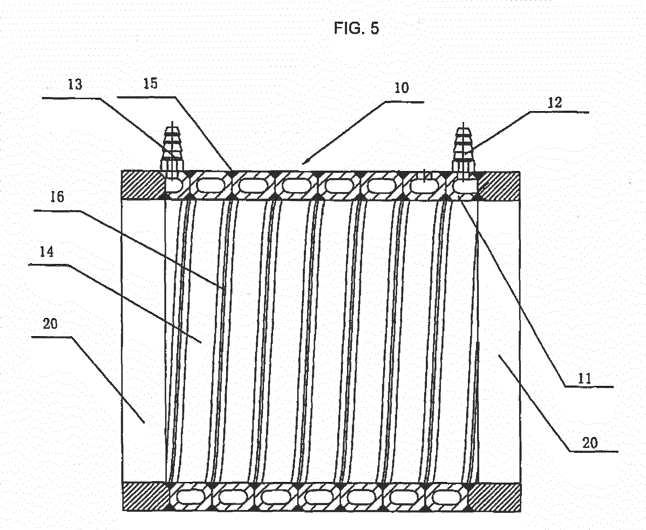

Embodiment 4: A motor housing as shown in Fig. 5, comprising a motor housing body 10 and an end cover 20 provided on both ends of the motor housing body 10, respectively; the motor housing body 10 comprises a hollowed metallic tube 11; a cross section of the hollowed metallic tube 11 is in a shape of square; both ends of the hollowed metallic tube 11 are provided with an inlet 12 and an outlet 13, respectively; the hollowed metallic tube 11 continuously circles around an axis to form numerous parallel annular components 14; the annular components 14 are circular components; the annular components 14 are fixed through welding on intermittent welding points 15; a gap 16 is provided among the annular components 14.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A barrel-shaped component, **characterized in that** it comprises:
a hollowed metallic tube;
both ends of the hollowed metallic tube being provided with an inlet and an outlet respectively; and
the hollowed metallic tube continuously circling around an axis to form numerous parallel annular components, wherein the annular components are fixed through welding.

2. A barrel-shaped component according to claim 1, **characterized in that** the annular components are fixed through welding at intermittent welding points.

3. A barrel-shaped component according to claim 2, **characterized in that** a gap is reserved among the annular components.

4. A barrel-shaped component according to claim 1, **characterized in that** the annular components are fixed through welding on a continuous welding layer.

5. A barrel-shaped component according to claim 1, **characterized in that** the annular components are circular components.

6. A barrel-shaped component according to claim 1, **characterized in that** the annular components are polygonal circular components.

7. A barrel-shaped component according to claim 1, **characterized in that** a shape of a cross section of the hollowed metallic tube is a circle or a polygon.

8. A vessel, comprising:
a cylinder;
a base plate and an end cover respectively on two ends of the cylinder; **characterized in that** the cylinder comprises numerous parallel annular components formed by a hollowed metallic tube continuously circling on an axis;
both ends of the hollowed metallic tube being provided with an inlet and an outlet respectively; and
the annular components are fixed by means of seal welding.

9. A vessel according to claim 8, **characterized in that** the annular components are fixed through welding on a continuous welding layer.

10. A vessel according to claim 8, **characterized in that** the annular components are circular components.

11. A vessel according to claim 8, **characterized in that** the annular components are polygonal annular components.

12. A vessel according to claim 8, **characterized in that** a shape of a cross section of the hollowed metallic tube is a circle or a polygon.

13. A motor housing, comprising:
a housing body; and
two end covers on both ends of the motor housing;
**characterized in that** the housing body comprises numerous parallel annular components formed by a hollowed metallic tube continuously circling on an axis;
both ends of the hollowed metallic tube being provided with an inlet and outlet respectively; and
the annular components are fixed through welding.

14. A motor housing according to claim 13, **characterized in that** the annular components are fixed through intermittent welding points.

15. A motor housing according to claim 13, **characterized in that** a gap is reserved among the annular components.

16. A motor housing according to claim 13, **characterized in that** the annular components are welded through welding on a continuous welding layer.

17. A motor housing according to claim 13, **characterized in that** the annular components are circular components.

18. A motor housing according to claim 13, **characterized in that** the annular components are polygonal annular components.

19. A motor housing according to claim 13, **characterized in that** a shape of a cross section of the hollowed metallic tube is a circle or a polygon.
